# EUROPÄISCHE PATENTANMELDUNG

(11) **EP 0 971 224 A2**
(43) Veröffentlichungstag der Anmeldung: **12.01.2000**
(21) Anmeldenummer: 99112618.6
(22) Anmeldetag: 02.07.1999
(51) Int. Cl.: G01N 3/28

(54) **Prüfverfahren und Prüfvorrichtung für die Beurteilung der Tiefziehfähigkeit von zusammengeschweissten Blechen**

(30) Priorität: 10.07.1998 DE 19830888
(71) Anmelder: Salzgitter AG, 31226 Peine (DE)
(72) Erfinder: Overrath, Jens, Dipl.-Ing, 38114 Braunschweig (DE); Baumgarth, Marco, 38118 Braunschweig (DE)
(74) Vertreter: Lins, Edgar, Dipl.-Phys. Dr.jur.

(57) **Zusammenfassung**

Die Erfindung betrifft ein Prüfverfahren und eine Prüfvorrichtung für die Beurteilung der Tiefziehfähigkeit von zusammengeschweißten Blechen, insbesondere mit unterschiedlicher Dicke.
Die Aufgabe besteht darin, ein Prüfverfahren und eine Prüfvorrichtung für die Tiefungsmethode zu entwickeln.
Erfindungsgemäß wird die Aufgabe dadurch gelöst, daß ein Prüfteil aus verschieden dicken Prüfteilbereichen, die mit einer Schweißnaht verbunden sind, auf einer Matrize plaziert wird und in der Höhe verstellbare Klemmbacken das Prüfteil auf der gesamten Fläche des Ringbereiches mit gleicher Klemmkraft beaufschlagen und ein Stempel mit einem kugelförmigen Kopf, dessen Durchmesser der Dicke der Schweißnaht des Prüfteils entspricht, auf die Schweißnaht gedrückt wird, bis das Prüfteil einreißt.

## Beschreibung

Die Erfindung betrifft ein Prüfverfahren und eine Prüfvorrichtung für die Beurteilung der Tiefziehfähigkeit von zusammengeschweißten Blechen, insbesondere mit unterschiedlicher Dicke. Mit der Prüfvorrichtung wird nach der Tiefungsmethode eine Prüfung der Bleche vorgenommen. Bekannte Prüfvorrichtungen werden zur Prüfung von Blechen und Bändern mit einer Breite von ≥ 90 mm und einem Dickebereich zwischen 0,2 und 2,0 mm eingesetzt (siehe DIN 50101 vom September 1979). Mit einer solchen Vorrichtung läßt sich die Tiefziehfähigkeit von Blechen und Bändern feststellen. Dazu wird ein Stempel gleichförmig mit einer bestimmten Vorschubgeschwindigkeit gegen das Blech gedrückt, bis es einreißt. Die bekannte Prüfvorrichtung ist allerdings nur geeignet, Bleche zu prüfen, die im gesamten Einspannbereich die gleiche Dicke haben. Die Prüfvorrichtung ist nicht geeignet, aus verschiedendicken Blechen zusammengeschweißte Bleche zu prüfen. Die Prüfvorrichtung kann solche Bleche nicht in einem geschlossenen Ringbereich um den Prüfort, wo der Stempel wirksam wird, festspannen.

Der Erfindung liegt die Aufgabe zugrunde, ein Prüfverfahren und eine Prüfvorrichtung für die Tiefungsmethode zu entwickeln. Damit sollen Bleche, die aus unterschiedlich dicken Blechen zusammengeschweißt sind, geprüft werden.

Erfindungsgemäß wird die Aufgabe dadurch gelöst, daß ein Prüfteil, bestehend aus verschieden dicken Prüfteilbereichen, die mit einer Schweißnaht verbunden sind, auf einer Matrize plaziert wird. In der Höhe verstellbare Klemmbacken beaufschlagen die gesamte Fläche des Ringbereiches vom Prüfteil mit gleicher Klemmkraft. Im Stempel ist ein auswechselbarer, kugelförmiger Kopf vorgesehen, so daß der Durchmesser des gewählten kugelförmigen Kopfes der Dicke der Schweißnaht des Prüfteils entspricht. Der Stempel mit dem kugelförmigen Kopf wird auf die Schweißnaht des Prüfteils gedrückt, bis das Prüfteil einreißt.

Die in der Höhe verstellbaren Klemmbacken entsprechen flächenmäßig den verschieden dicken Prüfteilflächen, so daß der gesamte Ringbereich mit gleicher Klemmkraft eingespannt wird.
Ein Körperschallsensor reagiert auf das Signal, Abriß des Prüfstückes, und beendet den Prüfvorgang.

Erfindungsgemäß ist weiterhin, daß eine Prüfvorrichtung für die Beurteilung der Tiefziehfähigkeit von zusammengeschweißten Blechen unterschiedlicher Dicke aus einem ringförmigen Blechhalter mit ebener Auflagefläche, einer Matrize und einem Stempel besteht. Die Matrize ist an ihrer Arbeitsseite mit zwei oder mehreren auf verschiedene Höhen einstellbaren Klemmbacken ausgestattet. Diese Klemmbacken drücken mit annähernd gleicher Klemmkraft auf das Prüfstück. Weiterhin ist ein Stempel mit einem auswechselbaren, kugelförmigen Kopf angeordnet, der in Wirkverbindung mit den durch die Klemmbacken fixierten Flächen des Prüfteiles steht.

Erfindungsgemäß wird ein Körperschallsensor in der Matrize angeordnet, der auf das Signal, Abriß des Prüfstückes, reagiert und den Prüfvorgang beendet. Der Körperschallsensor kann an beliebiger Stelle in der Matrize angeordnet werden.

Erfindungsgemäß ist weiterhin, daß die Matrize mit mehreren, in der Höhe verstellbaren Klemmbacken ausgestattet ist, so daß die Klemmbacken die Matrize an jedes Teil des Prüfteiles anpressen. Die Vorrichtung hat eine Zentriereinheit, mit der die Schweißnaht des Prüfteiles so zentriert wird, daß der kugelförmige Kopf des Stempels die Schweißnaht direkt beaufschlagt.

Mit der Erfindung kann durch die Möglichkeit der Einstellung der Klemmbacken auf verschiedene Dicken des zu prüfenden Bleches dem Rechnung getragen werden, daß auch ein Blech mit unterschiedlicher Dicke sicher geprüft werden kann. Speziell bei zusammengeschweißten Blechen wird das Blech im gesamten Ringbereich mit gleicher Klemmkraft eingespannt. Die Prüfung der Schweißnaht des zusammengeschweißten Bleches ist möglich, weil der Durchmesser des kugelförmigen Stempels variiert werden kann, so daß er in jedem Fall der Dicke der Schweißnaht entspricht. Mit der Prüfvorrichtung wird in jedem Fall die Prüfung bis zur Plaine-Strain-Beanspruchung (Nebenformänderung) geprüft. Durch die Anpassung bzw. Vergrößerung des kugelförmigen Kopfes des Stempels wird auch in größeren Blechdickenbereichen der zusammengeschweißten Bleche die schärfste Prüfbeanspruchung, wie sie eventuell bei einem Umformprozeß auftreten kann, realisiert. Mit dem beschriebenen Prüfverfahren und der beschriebenen Prüfvorrichtung kann die Tiefziehfähigkeit von zusammengeschweißten Blechen sicher beurteilt werden.

Die Erfindung wird anhand eines Ausführungsbeispiels näher erläutert. Es zeigt:

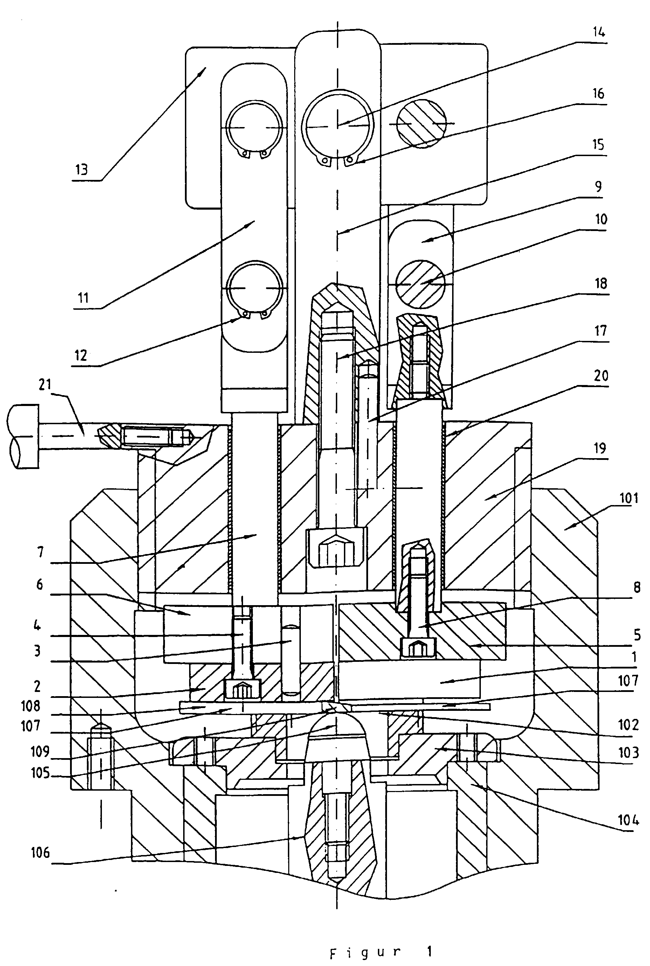

- Fig. 1: einen Querschnitt durch die Prüfvorrichtung.

Die Prüfvorrichtung besteht aus einem ringförmigen Blechhalter 102 mit einer ebenen Auflagefläche, einer Matrize 19 mit zwei oder mehreren Klemmbacken 1, 2 sowie einem Stempel 105 mit auswechselbarem Kopf. Zwischen dem Blechhalter 102 und der Matrize 19 ist ein aus verschieden dicken Prüfteilbereichen 107 zusammengeschweißtes Prüfteil 108. Die verschieden dicken Prüfbereiche 107 sind mit einer Schweißnaht 109 zum Prüfteil 108 zusammengefügt. Im Stempel 105 befindet sich ein auswechselbarer Kopf so daß verschieden große, kugelförmige Köpfe angeordnet werden können. Für die Prüfung wird ein solcher Kopfdurchmesser verwendet, der der Dicke der Schweißnaht entspricht. Mit der Anordnung eines Körperschallsensors in der Matrize wird gewährleistet, daß der Prüfvorgang bei dem Signal, Abriß des Prüfstückes, beendet wird.

Der Durchmesser des kugelförmigen Kopfes kann auf 25 mm vergößert werden, um auch im Blechdickenbereich > 0,2 bis 2 mm (entspricht dem Blechdickenbereich des genormten Tiefungsversuchs) eine Plaine-Strain-Beanspruchung (Nebenformänderung) zu erzielen. Durch die Vergrößerung des Stempeldurchmessers wird auch in größeren Blechdickenbereichen der zusammengeschweißten Metallbleche die schärfste Prüfbeanspruchung, wie sie eventuell bei einem Umformprozeß auftreten kann, realisiert. Deshalb führt diese Modifikation des Stempeldurchmessers im Vergleich zur genormten Erichsen-Tiefung in Verbindung mit der Vergleichmäßigung der Klemmkraft bei Dickentoleranzen der Prüfstücke zu einer neuartigen Prüfvorrichtung zur Beurteilung der Tiefziehfähigkeit von zusammengeschweißten Metallblechen, insbesondere bei unterschiedlichen Blechdicken.

Die Anpassung der Matrizenhälften an die unterschiedlichen Blechdicken bei gleichzeitiger Kraftaufteilung erfolgt bei der Erfindung automatisch durch eine mechanische Wippenkonstruktion der Matrizen.

Die Hauptkomponenten der in Figur 1 dargestellten Prüfvorrichtung sind ein ringförmiger Blechhalter 102 mit einer ebenen Auflagefläche, eine Matrize 19 mit zwei oder mehreren Klemmbacken 1 und 2 sowie ein Stempel 105 mit einem auswechselbaren Kopf so daß kugelförmige Stempelköpfe mit unterschiedlichen Durchmessern für die zu prüfende Blechdickenkombination angepaßt werden können. Zwischen dem Blechhalter 102 und der Matrize 19 ist ein aus verschieden dicken Blechen 107 und mit einer Schweißnaht 109 verbundenes Prüfteil 108 eingespannt. Der untere Teil der Prüfvorrichtung wird von einem Gehäuse 101 umschlossen.
In die Matrize 19 werden Lagerbuchsen 20 eingepreßt und verklebt. Die Bohrungen der Lagerbuchsen sind auf Maß gearbeitet. In die Gabel des inneren Lagerbockes 15 wird eine Wippe 13 eingeschoben, ein großer Wippenbolzen 14 durch die Bohrung getrieben und mit Wellensicherungsringen 16 gesichert. In den Außenbohrungen der Wippe 13 befinden sich kleine Wippenbolzen 10, die mittig eingepreßt sind.
In den äußeren Lagerböcken 9 befinden sich ebenfalls kleine Wippenbolzen 10. Dann werden Laschen 11 auf die kleinen Wippenbolzen 10 aufgeschoben. Eine Bohrung der Lasche 11 nimmt den Bolzen der Wippe 13 und eine weitere Bohrung den Bolzen eines äußeren Lagerbockes 9 auf. Die Laschen werden auf den Bolzen mit Wellensicherungsringen 12 gegen Abrutschen gesichert.

In die Deckplatte der Matrize sind auf der Oberseite Zylinderstifte 17 etwa 25 mm tief eingepreßt. Auf diesen Stiften sitzen innere Lagerböcke 15, die von der Unterseite mit Hilfe von Zylinderschrauben 18 mit einem Anziehdrehmoment von 130 Nm ± 5 Nm festgeschraubt sind. Vier Führungsstangen 7 sind von unten durch die Lagerbuchsen 20 eingeschoben. Auf den Gewinden der Führungsstangen 7 befinden sich die aufgeschraubten äußeren Lagerböcke 9. Die Führungsstangen 7 sind in die Passungen einer rechten und linken Platte 5, 6 eingesetzt und mit Zylinderschrauben 8 mit einem Anziehdrehmoment von 13 Nm ± 3 Nm befestigt.

In die rechte und linke Platte 5, 6 werden Zylinderstifte 3 etwa 15 mm tief eingesetzt. Auf diese Zylinderstifte wird die rechte und linke Klemmbacke der Matrize aufgeschoben und mit Zylinderschrauben 4 mit einem Anziehdrehmoment von 7 Nm ± 2 Nm verschraubt. In der Deckplatte der Matrize 19 sind Verschlußgriffe 21 eingeschraubt, mit deren Hilfe der Prüfkopf auf der Prüfvorrichtung befestigt wird.

Die Arbeitsweise der Prüfvorrichtung ist folgende:

Unter Berücksichtigung des Dickenunterschiedes des Prüfteiles 108 findet durch die mechanische Wippe 13 automatisch eine Anpassung an die unterschiedlich dicken Blechteile bei gleichzeitigem Kraftausgleich statt. Bei hochgeschraubter Matrize 19 wird das Prüfteil 108 auf den Blechhalter 102 aufgelegt und die Matrize 19 in die in Figur 1 dargestellte Stellung gebracht bzw. verriegelt. Dann wird mittels eines auf den Blechhalter 102 einwirkenden Stellmittels 103, das auf einem Aufnahmeteil 104 angeordnet ist, die erforderliche Klemmkraft aufgebracht. Bei über den gesamten Umfang gleichmäßig fest eingespanntem Prüfteil 108 wird der Stempel 105 mit einem schematisch dargestellten Stellglied 106 gegen das Prüfteil 108 gedrückt. Da die Schweißnaht 109 im Bereich des Stempels 105 liegt, läßt sich deren Qualität als Maß der erreichbaren Eindringtiefe bis zum Anriß mit Hilfe einer solchen Prüfvorrichtung feststellen.

### Liste der verwendeten Bezugszeichen

- 1, 2: Klemmbacke
- 3: Zylinderstift
- 4, 8: Zylinderschraube
- 5, 6: Platte
- 7: Führungsstange
- 9: Lagerbock
- 10: Wippenbolzen, klein
- 11: Lasche
- 12, 16: Wellensicherung
- 13: Wippe
- 14: Wippenbolzen, groß
- 15: Lagerbock, innen
- 17: Zylinderstift
- 18: Zylinderschraube
- 19: Matrize
- 20: Lagerbuchse
- 21: Verschlußgriff
- 101: Gehäuse
- 102: Blechhalter
- 103: Stellmittel
- 104: Aufnahmeteil
- 105: Stempel
- 106: Stellglied
- 107: verschieden dicke Prüfteilbereiche
- 108: Prüfteil
- 109: Schweißnaht des Prüfteils

## Patentansprüche

1. Prüfverfahren für die Beurteilung der Tiefziehfähigkeit von zusammengeschweißten Blechen unterschiedlicher Dicke,
dadurch gekennzeichnet, daß
ein Prüfteil (108), welches aus verschieden dicken Prüfteilbereichen (107) besteht, die mit einer Schweißnaht (109) verbunden sind, auf einer Matrize (19) plaziert wird und in der Höhe verstellbare Klemmbacken (1, 2) das Prüfteil (108) auf der gesamten Fläche des Ringbereiches mit gleicher Klemmkraft beaufschlagen und ein Stempel mit einem kugelförmigen Kopf, dessen Durchmesser der Dicke der Schweißnaht des Prüfteils (108) entspricht, auf die Schweißnaht gedrückt wird, bis das Prüfteil einreißt.

2. Prüfverfahren nach Anspruch 1, dadurch gekennzeichnet, daß
die in der Höhe verstellbaren Klemmbacken jeweils flächenmäßig den verschieden dicken Prüfteilflächen entsprechen, so daß der gesamte Ringbereich mit gleicher Klemmkraft eingespannt wird.

3. Prüfverfahren nach Anspruch 1, dadurch gekennzeichnet, daß
ein Körperschallsensor ein Signal, Abriß des Prüfstückes, erfaßt und den Prüfvorgang beendet.

4. Prüfvorrichtung für die Beurteilung der Tiefziehfähigkeit von zusammengeschweißten Blechen unterschiedlicher Dicke, bestehend aus einem ringförmigen Blechhalter mit ebener Auflagefläche, einer Matrize und einem Stempel,
dadurch gekennzeichnet, daß
die Matrize (19) in zwei oder mehrere Bereiche geteilt ist und jedes Teil an seiner Arbeitsseite auf verschiedene Höhen einstellbare Klemmbacken (1, 2) aufweist, die mit gleicher Klemmkraft beaufschlagt sind und ein Stempel (105) mit einem auswechselbaren, kugelförmigen Kopf angeordnet ist, der in Wirkverbindung mit der durch die Klemmbacken (1, 2) fixierten Fläche eines Prüfteiles (109) steht.

5. Prüfvorrichtung nach Anspruch 4, dadurch gekennzeichnet, daß
ein Körperschallsensor in der Matrize (19) angeordnet ist, der auf das Signal, Abriß des Prüfstückes, reagiert und den Prüfvorgang beendet.

6. Prüfvorrichtung nach Anspruch 4, dadurch gekennzeichnet, daß
das Prüfteil (108) mit den in der Höhe verstellbaren Klemmbacken (1, 2) so fixiert wird, daß der Bereich der Schweißnaht des Prüfteils (109) durch den kugelförmigen Kopf des Stempels beaufschlagt wird, wobei der Durchmesser des kugelförmigen Kopfes der Dicke der Schweißnaht entspricht.
